(19) **Europäisches Patentamt**

**European Patent Office**

**Office européen des brevets**

(11) **EP 1 091 501 A1**

(12) **EUROPEAN PATENT APPLICATION**
published in accordance with Art. 158(3) EPC

(43) Date of publication:
**11.04.2001 Bulletin 2001/15**

(51) Int. Cl.⁷: **H04B 1/707**, H04J 13/04,
H04B 7/26, H04Q 7/28

(21) Application number: **00921063.4**

(22) Date of filing: **27.04.2000**

(86) International application number:
**PCT/JP00/02778**

(87) International publication number:
**WO 00/65738 (02.11.2000 Gazette 2000/44)**

(84) Designated Contracting States:
**AT BE CH CY DE DK ES FI FR GB GR IE IT LI LU
MC NL PT SE**
Designated Extension States:
**AL LT LV MK RO SI**

(30) Priority: **27.04.1999 JP 11936599**

(71) Applicant: **Yozan Inc.
Tokyo 155-0031 (JP)**

(72) Inventors:
 • **ZHOU, Changming
 Tokyo 155-0031 (JP)**
 • **SUZUKI, Kunihiko
 Tokyo 155-0031 (JP)**

(74) Representative:
**Grünecker, Kinkeldey,
Stockmair & Schwanhäusser
Anwaltssozietät
Maximilianstrasse 58
80538 München (DE)**

(54) **DS-CDMA RECEIVER**

(57) A path search stage comprises smaller number of sliding correlators than the code length of a predetermined spreading code, calculates a correlation at a phase having a center of correlation peaks detected with a matched filter as a center timing, and causes change in the calculation frequency according to the change in a delay profile. Thereby, the reduction in the circuit size and the electric power consumption may be realized.

FIG. 1

## Description

Technical Field

The present invention relates to a receiver for a direct sequence code division multiple access (DS-CDMA) communication to transmit a signal obtained through multiplication of an information signal for transmission by a predetermined spreading code at the transmitting part, and calculate a correlation between a received signal and the above spreading code and demodulate the above information signal at the receiving part.

Background Art

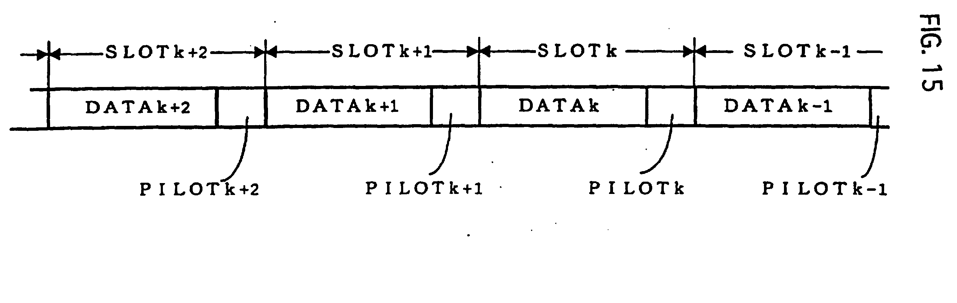

Conventionally, a receiver of a DS-CDMA system, more particularly a receiver of a mobile station has been provided with a cell search stage to perform initial cell search, and a path search stage to detect a multipath timing. The cell search stage calculates a correlation between a received signal and a spreading code, and obtains a correlation power to select a base station as a transmitting source. On the other hand, the path search stage calculates a delay profile by correlation operation between a received signal and a spreading code to detect a multipath timing (phase) based on the delay profile. FIG. 15 shows a format of a radio transmission frame of a received signal processed at the path search stage. The radio transmission frame of the signal comprises a plurality of slots, and each slot SLOTk has a pilot block PILOTk and a data block DATAk. The pilot block PILOTk includes a known signal, based on which fading compensation of the data block is performed. Thereafter, the delay profile of the data block is calculated.

And data blocks and pilot blocks in FIG. 15, in some cases, maybe transmitted as two parallel channels, that is, maybe divided to two radio frames, one comprising only data blocks, and the other only pilot blocks. In the above cases, each user of the same cell performs fading compensation of the data blocks on the known signal for the channel comprising only pilot blocks, and the channel is called as a common pilot channel.

The mobile station has been strongly required to have the minimum electric power consumption in order to secure the portability and long operation time. Then, the applicant of the present invention has realized a filter circuit where the correlation operation at the cell search stage is performed by a high speed operation matched filter, and the correlation operation at the path search stage by sliding correlators with a low electric power consumption to cause high speed initial synchronization, and reduction in the circuit size and the electric power consumption (Japanese published unexamined application 19950007-215389). However, a further reduction in the electric power consumption has been strongly required. In conventional mobile stations, the path search operation has been performed even at a stationary state and a low-speed moving, similarly as at high-speed moving, to cause high electric power consumption. Thereby, there have been problems of increase in the device weight caused by use of batteries with large capacity, and insufficiency in the battery life.

The present invention has been made under the above circumstances to offer a DS-CDMA receiver with further reduction in the circuit size and the electric power consumption.

Disclosure of Invention

A DS-CDMA receiver according to the present invention has smaller number of multiplication circuits than that of the code length of a second spreading code, performs correlation operation at a phase with a center of the correlation peak train detected at the above matched filter as a center phase, and causes change in the calculation frequency according to the change in the delay profile.

Moreover, a DS-CDMA receiver according to the present invention calculates a correlation by corresponding number of sliding correlators to that of the range of the phase window with a center of the correlation peak train as a center phase to cause change in the width of the phase window according to the width of the correlation peak train during reception. And in the DS-CDMA receiver according to the invention, there is a reduced start frequency of the overall path search stage when the change in the delay profile is small at a stationary state and low speed moving, and a higher frequency of the overall path search stage when the change is large.

Brief Description of Drawings

FIG. 1 shows a block diagram of a DS-CDMA receiver of one of embodiments according to the present invention.
FIG. 2 shows a block diagram of a cell search stage of the embodiment shown in FIG. 1.
FIG. 3 shows a block diagram of a path search stage of the embodiment shown in FIG. 1.
FIG. 4 shows a conceptual diagram of operation of coherent adding at the path search stage of the embodiment shown in FIG. 1.

FIG. 5 shows a conceptual diagram of search timing at the path search stage of the embodiment shown in FIG. 1.

FIG. 6 shows a flowchart of a controlling method of a search frequency (a start frequency of the overall path search stage) at the path search stage of the embodiment shown in FIG. 1.

FIG. 7 shows a flowchart of a method to decide a width of a phase window of the embodiment shown in FIG. 1.

FIG. 8 shows a block diagram of sliding correlators at the cell search stage and the path search stage of the embodiment shown in FIG. 1.

FIG. 9 shows a block diagram of a control channel receiving stage of the embodiment shown in FIG. 1.

FIG. 10 shows a block diagram of a traffic channel receiving stage of the embodiment shown in FIG. 1.

FIG. 11 shows a block diagram of a transmitting roll-off filter of the embodiment shown in FIG. 1.

FIG. 12 shows a block diagram of a transmitting stage of the embodiment shown in FIG. 1.

FIG. 13 shows a block diagram of a radio frequency control stage of the embodiment shown in FIG. 1.

FIG. 14 shows a block diagram of a control stage of the embodiment shown in FIG. 1.

FIG. 15 shows a conceptual diagram of a frame format of a conventional traffic channel.

Best Mode for Carrying Out the Invention

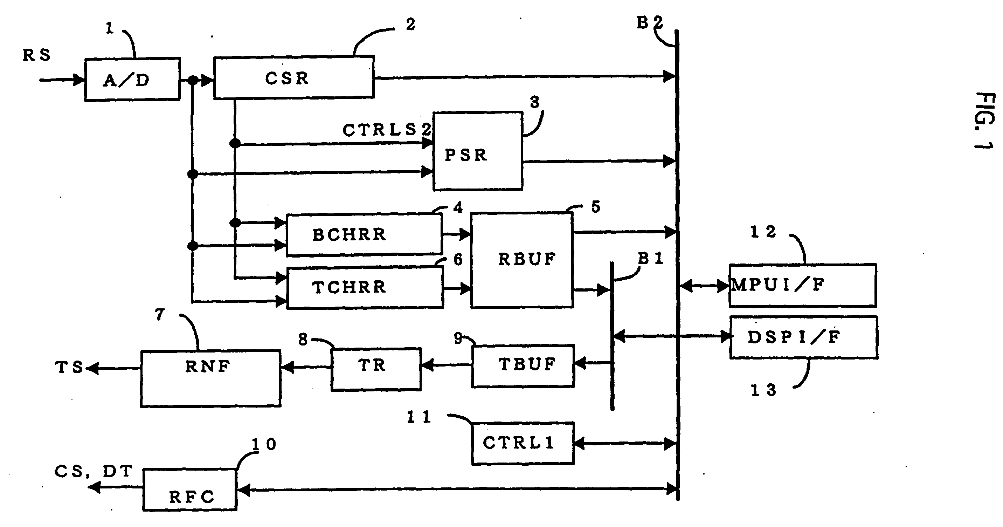

A DS-CDMA receiver of one of embodiments according to the present invention will be described below, referring to the attached drawings. FIG. 1 shows a block diagram of the overall configuration of the above embodiment. A radio frequency received signal is down-converted to a baseband signal RS, which is further converted to a digital signal by an analog digital (A/D) converter 1. The received digital signal is input in parallel to a cell search stage 2, a path search stage 3, a control channel receiving stage 4, and a traffic channel receiving stage 6.

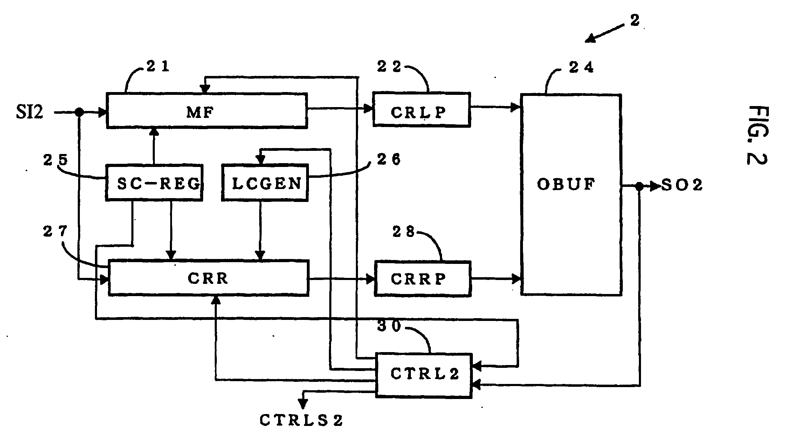

The cell search stage 2 comprises a matched filter 21 (FIG. 2) to calculate a correlation between the received signal and a predetermined spreading code, and detects a synchronous timing with the received signal by the filter 21 (initial synchronization). The duration to acquire the received signal is called as a chip time, and the matched filter 21 completes the correlation operation every one chip time. After detecting the synchronous timing, the stage 2 identifies a spreading code or a scrambling code peculiar to each base station to select a base station for receiving the signals.

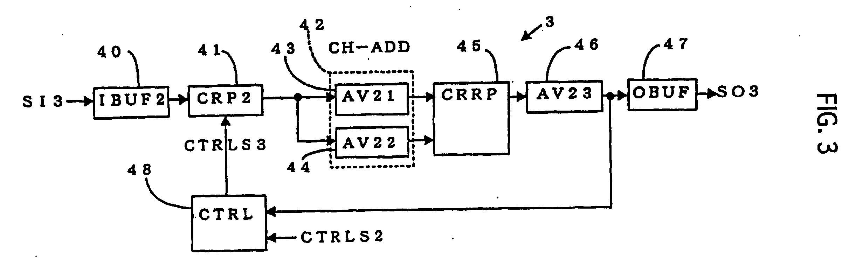

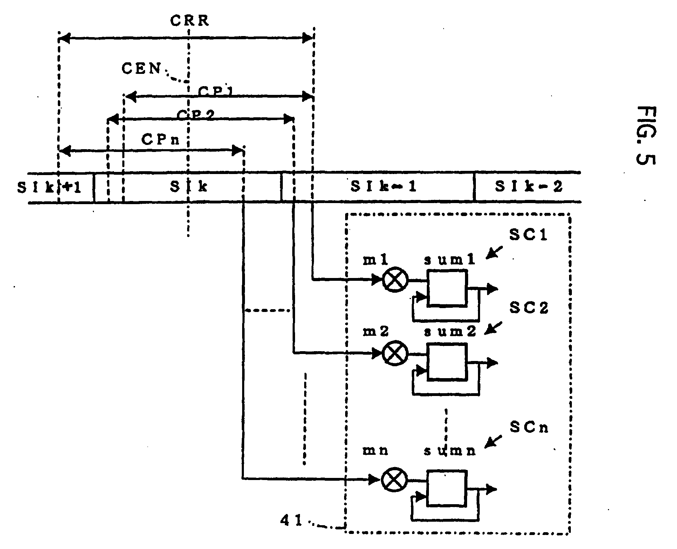

After the initial synchronization, a path search stage 3 extracts a plurality of predetermined correlation peaks (for multipaths), based on a synchronous timing (frame synchronization and slot synchronization) with the received signal, to identify their timings (phases), when multipath signals are received by the multipath phenomenon (a plurality of signals with various time differences reach a mobile station by reflection and so on, though one signal is transmitted.). A correlator 41 (FIG. 3) comprising a plurality of sliding correlators is used for the above extraction of the correlation peaks. The above matched filter has corresponding number of multipliers (not shown) to all the timings required for correlation operation to calculate the correlation for each timing. However, the circuit size and electric power consumption required for the above case are large. On the other hand, the circuit size and the electric power consumption of the case with sliding correlators are remarkably reduced, comparing with those of the case where corresponding numbers of multipliers to all the timings are provided, as much smaller numbers of sliding correlators in comparison with those of the latter case, for example, sliding correlators SC1-SCn (FIG. 5) have multipliers m1 - mn (FIG. 5), respectively. But, much time (one symbol duration = spreading factor x chip time) is required for one correlation operation. Then, the cell search stage 2 is used only for the initial synchronization, and, after completion of the initial synchronization, the stage 2 is stopped to reduce the electric power consumption. Furthermore, the cell search stage is started not only for the initial synchronization (initial cell search), but also for peripheral cell search.

The cell search stage 2 selects a correlation peak train with the highest power (for the main path) as the initial synchronous timing in a subsequent control stage 30 (FIG. 2) after the matched filter 21. And, the timing is input to a path search stage 3 as a control signal CTRLS2.

The control channel receiving stage 4 receives control signals for various kinds of controls in the mobile station, despreads the signals by the sliding correlators, using a predetermined spreading code, and, after synchronous detection and RAKE combination, extracts control signals from the received signal to demodulate them. And the traffic channel receiving stage 6 despreads the signals by the sliding correlators, using a predetermined spreading code, and, after synchronous detection and RAKE combination, extracts traffic channel signals including information signals and so on to demodulate them. Multipath signal receiving timings for the control channels and the traffic channels are determined based on the search results of the path search stage 3, respectively.

The transmitting part of the mobile station is provided with a transmitting stage 8 to generate transmitting signals obtained through multiplication of the data to be transmitted by the spreading code, and transmit them from a radio frequency stage (not shown) after waveform shaping of them by a transmitting roll off filter 7. The radio frequency stage is controlled by a control stage RFC to output control signals CS, DT to the radio frequency stage.

After despreading, and RAKE combination of a signal at the control channel receiving stage 4 and the traffic channel receiving stage 6, the signal is input to the receiving buffer 5, and processed by a digital signal processor (DSP) through a DSP bus. B1 and a DSP interface 13. The signal to be transmitted from the above transmitting stage 8 is input to a transmitting buffer 9 through the bus B1 for temporary storage, and then to the transmitting stage 8 from the buffer 9.

The outputs of the cell search stage 2 and the path search stage 3 are processed by a microprocessor (not shown) through a microprocessor bus B2, and a microprocessor interface 12. A control stage 11 is provided for other controls in the mobile station, and is similarly driven by the microprocessor (MPU), too. The receiving buffer 5 is also connected to the bus B2, and processed by the microprocessor.

FIG. 2 shows details of a cell search stage. An input signal SI2 (corresponding to the output of the A/D converter 1 in FIG. 1.) is input to a matched filter 21, and a correlator 27 comprising a plurality of sliding correlators. A short code register 25 is connected to the matched filter 21 and the correlator 27. Moreover, a long code (scrambling code) generator 26 which may be a long code register is also connected to the correlator 27.

Identification of each cell, that is, the identification of a base station for receiving signals is performed with the long code (scrambling code), and a possible long code is generated by the long code generator 26. However, direct comparison with all the long codes requires much time for the identification. Then, the long codes are divided into a plurality of long code groups to identify the long code groups in the first place. The long code groups are identified with identifying codes for long code group which are supplied from the short code register 25. However, it is necessary to detect a slot synchronization timing before identification of the long code groups, and perform a correlation operation between the received signals and a synchronous short code, which is common to all the cells, and is also supplied from the register 25.

The cell search stage 2 sequentially performs a correlation operation between the received signals SI2 and a synchronous short code common to all the cells by the matched filter 21, in the first place, to calculate the powers of correlation signals of the outputs of the matched filter 21, and, then, recursive integration of the correlation powers is performed for one slot duration in a recursive integration circuit 22. The recursive integration of the correlation powers is performed for one or more frames to treat a timing with the highest output correlation power as a slot synchronous timing, and, also, as a receiving timing of a main path. According to the timing of the main path, a correlation operation between the short codes for identification of the long code groups and the received signals is performed, using a plurality of sliding correlators, to calculate the powers of the correlation outputs, using a correlation power operator 28. Long code groups are identified, based on the correlation powers using a plurality of short codes for identification of the long code groups. After identifying the long code groups, a long code of a base station (cell) for receiving signals is identified, based on the correlation output powers between the received signals and the combined codes of all the long codes in the groups with the short code for a symbol duration assigned to the control channel,

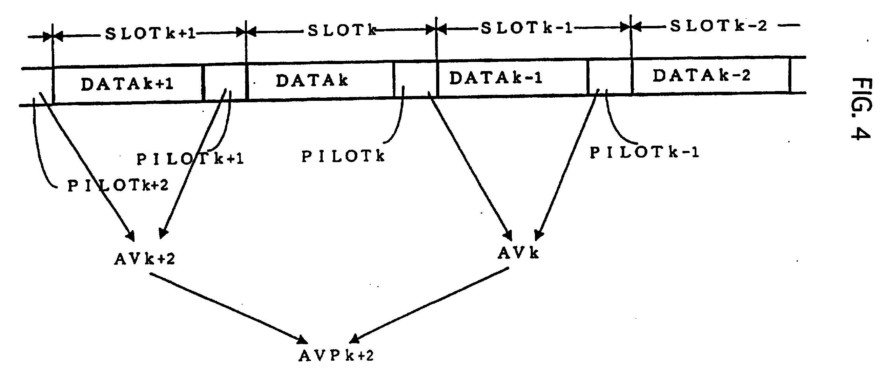

FIG. 3 shows details of the path search stage 3. A received signal of pilot blocks (from PILOTk-1 to PILOTk+1 in FIG. 4) in an input signal SI3 (corresponding to the output of the A/D converter 1 in FIG. 1) is despread in a correlator 41 comprising a plurality of sliding correlators after storage in an input buffer 40. Coherent adding of the output of the correlator 41 is performed in a coherent adder 42 after elimination of the modulation effect of the pilot signals. Thereafter, the correlation powers of the coherent adding outputs are calculated in a correlation power operator 45. The correlation powers are averaged with a recursive integration circuit 46, and input to an output buffer 47. A control circuit 48 is connected to the output side of the circuit 46, and detects a multipath timing of the output of the circuit 46. The above control signal CTRLS2 is also input to the circuit 48. The correlator 41 comprises smaller number of sliding correlators than that of the code length of spreading codes for the correlation operation. Timings, during which the sliding correlators are applied, depend on timings of the control signal CTRLS2 and the detected multipaths. The operation frequency of the correlator 41, that is, the frequency to calculate the correlation is adjusted according to change in the above delay profile, wherein the coherent adder 42 comprises averaging circuits 43, 44 in parallel, which average the pilot symbols of the adjacent symbol durations, respectively, to calculate the powers for those averages in the correlation power operator 45. In addition, the results of the power calculations are averaged at the recursive integration circuit 46 to detect the latest multipath timing from the average results. The detected multipath timing is applied to the receiving timing of the correlators for receiving the control channel and the traffic channel from the top of the slot just after the detection.

FIG. 4 shows a conceptual diagram of an operation of coherent adding at the path search stage 3. An average value Avk is generated by averaging pilot symbols of pilot blocks PILOTk-1, and PILOTk in adjacent slots SLOTk-1, and SLOTk. Similarly, an average value Avk+2 is generated by averaging pilot symbols of pilot blocks PILOTk+1 and PILOTk+2, respectively in the subsequent slots SLOTk+1 and SLOTk+2. The correlation powers are calculated from the average values to obtain the average value AVPk+2.

Thereby, it may be possible to eliminate noises and interferences and realize improvements in detection accuracy and stabilization of multipaths by coherent adding to calculate the averages for a plurality of slots. And the operation may be performed with comparatively small number of sliding correlators, as the objects of the coherent adding are only the pilot symbols, and only despreading of the received signals of the pilot symbols are required. Moreover, as described below, the range of the phases (phase window), and the calculation frequency for calculation of delay profiles may be adjusted to reduce the number and the frequency of usage of sliding correlators to the minimum. Though the pilot blocks of a traffic channel shown in FIG. 4 are object received signals for calculation of the delay profiles of the path search stage, pilot blocks of control channels, also, may be the object received signal for calculation of the delay profiles, if the pilot blocks of the control channel have similar configuration.

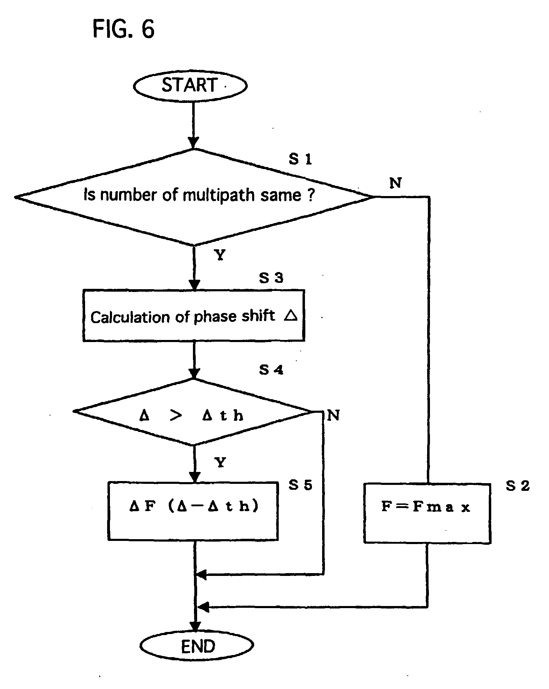

FIG. 6 shows one of flowcharts for a controlling system to adjust the start frequency of the above path search stage 3 as a whole. At the step S1, the number of multipath correlation peaks in a predetermined duration (in one symbol duration) with a level equal to or exceeding a predetermined level is counted, and it is judged whether the multipath number is changed from that of the previous multipath detection result. When the multipath number is changed, an operation frequency F is set to the maximum value Fmax at the step S2 to end the operation. On the other hand, when the number is not changed, overall evaluation of the phase shifts of each multipath is performed at the next step S3. One example of the evaluations will be described below. It is assumed that the number of multipaths is r, the multipaths are put as P1-Pr, the peak levels of each multipath signal as Ps1 - Psr, and the phase shifts as $\delta 1$ - $\delta r$. Then, the total sum of phase shifts PD, and a value PDR by dividing the PD by the total sum of the peak levels are used as indices. The indices are expressed by formulae (1), (2):

$$PD = \sum_{i=1}^{r} \delta_i \tag{1}$$

$$PDR = \frac{\sum_{i=1}^{r} \delta_i}{\sum_{i=1}^{r} Psi} \tag{2}$$

When the indices such as PD and PDR are represented by $\Delta$, it is judged at the step S4 whether $\Delta$ is exceeding a predetermined threshold $\Delta$th. If not exceeding, the processing is stopped as it is, and if exceeding, the frequency is corrected by a frequency correction function $\Delta F(\Delta-\Delta th)$ to {F+F($\Delta-\Delta$th)} at the step S5. As the frequency correction function, for example, there may be used a function, by which a frequency change $\Delta F$ is generated through multiplying ($\Delta-\Delta$th) by a predetermined proportional constant, and the frequency F is changed in a range between the minimum value Fmin and the above Fmax.

FIG. 5 shows a conceptual diagram of timings during which the above correlator 41 is applied. When the above received signals SI3 are expressed by a time sequence signal SIk, the length of each signal is one symbol duration, and each sliding correlator SC1-SCn calculates the correlation between the signals SIk and a predetermined spreading code at sequentially shifted timings. The operation interval CP1-CPn of each sliding correlator SC1-SCn is equal to the symbol duration, and the correlation is calculated within a range CRR with a some margin around a center CEN (shown by a dotted and dashed line in the signal Sk) of each symbol duration. Thereby, the synchronization is recoverable without overlooking peak positions, even when there is a change in signals.

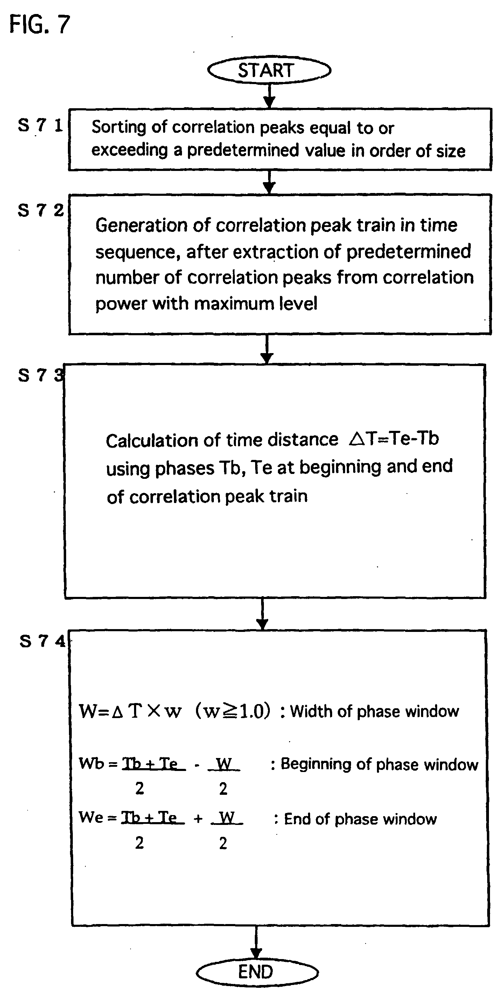

FIG. 7 shows a flowchart of a method to decide a width of a phase window. Extracted correlation powers are sorted after extracting correlation powers equal to or exceeding a predetermined value (Step S71), wherein predetermined number of correlation peaks are extracted from a correlation power with the maximum level to generate a correlation peak train where the correlation peaks are arranged in a time sequence (Step S72). Phases Tb, Te at the beginning and the end of the correlation peak train are obtained, and a time distance between them $\Delta T=Te-Tb$ is calculated (Step S73). Thereby, a range for the correlation operation with the sliding correlators, that is, data for decision of the phase window may be obtained.

The width W of the phase window is obtained through multiplying $\Delta T$ by a predetermined coefficient w (1.0 or more), and the window is disposed in a range with an equal width in both directions around a center between Tb and Te, that is, (Tb+Te)/2 (Step S74), wherein the value of w depends on conditions of the communication channels, and is set larger under the poor conditions.

The above sliding correlator SC1 comprises a multiplier m1, and an integrator sum1 to integrate the output of the multiplier. In the multiplier m1, multiplication of a predetermined spreading code and received signals is performed. Corresponding number of sliding correlators to the maximum width of the phase window (one symbol duration) are provided. When the width of the phase window is narrower than that of the maximum width, unused sliding correlators are stopped to reduce the electric power consumption. As the sliding correlators SC2-SCn have similar configurations, descriptions of them will be eliminated.

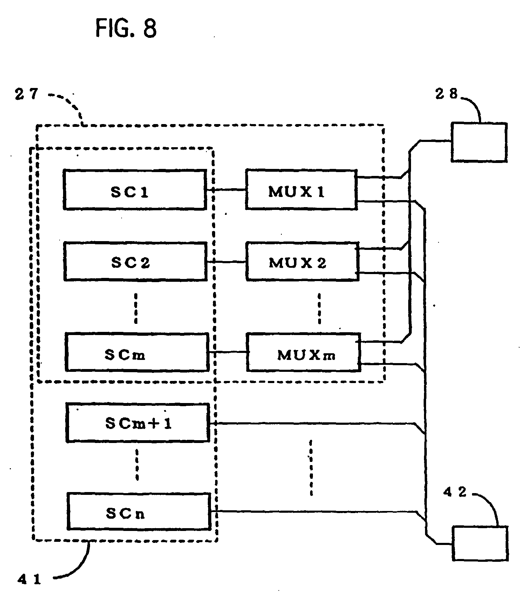

A block diagram shown in FIG. 8 describes that the correlator 27 of the cell search stage 2 and the correlator 41 of the path search stage 3 make common use of the sliding correlators. As shown in FIG. 8, the number, n, of sliding correlators SC1-SCn are used for the correlator 41, and sliding correlators SC1-SCm of them are also used for the correlator 27. Multiplexers MUX1-MUxm are connected to the output side of the sliding correlators SC1-SCm, respectively. The outputs of the multiplexers are connected to either a correlation power operator 28 of the cell search stage 2 or the coherent adder 42 of the path search stage 3. Thereby, the cell search stage 2 and the path search stage 3 make common use of the sliding correlators SC1-SCm to reduce the overall circuit size remarkably in comparison with the case where sliding correlators are provided independently without their common use.

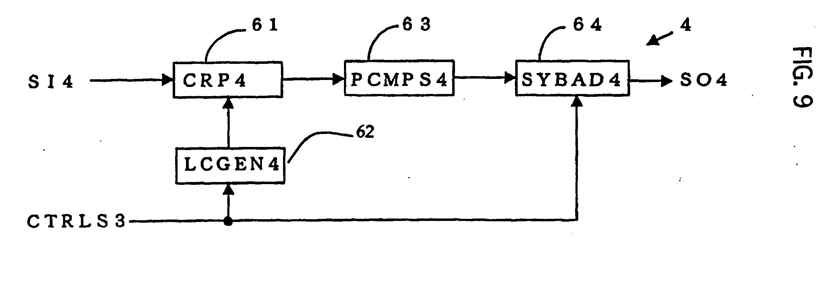

FIG. 9 shows a block diagram of details of the control channel receiving stage 4 comprising a sliding correlator 61 to which a received signal SI4 (corresponding to the output of the above A/D converter 1) is input; a synchronous detection circuit 63 to perform synchronous detection of data symbols using the results of channel estimation from the outputs of the sliding correlator 61 based on the pilot symbols; and a symbol adder 64 to perform RAKE combination of the outputs of the synchronous detection circuit 63. A register 62 to supply a predetermined long code and short code (spreading code) is connected to the sliding correlator 61. A long code is supplied to the sliding correlator 61 at a timing designated by the above control signal CTRLS3, that is, a timing detected at the path search stage 3. Moreover, the control signal CTRLS3 is also input to a symbol adder 64 to perform RAKE combination for integration of all, the multipath signals.

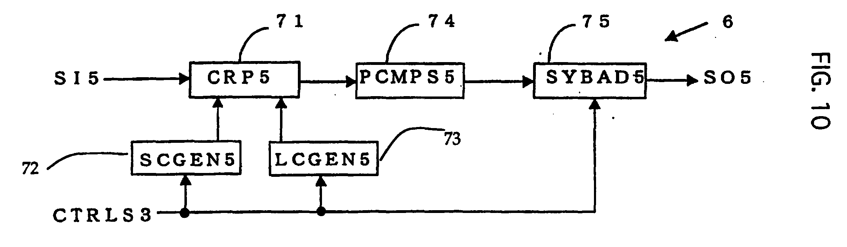

FIG. 10 shows a block diagram of details of the traffic channel receiving stage 6 comprising a sliding correlator 71 to which a received signal SI5 (corresponding to the output of the above A/D converter 1) is input; a synchronous detection circuit 74 to perform synchronous detection of data symbols using the results of channel estimation from the outputs of the sliding correlator 71 based on the pilot symbols; and a symbol adder 75 to perform RAKE combination of the outputs of the synchronous detection circuit 74. Registers 72, 73 respectively to supply a predetermined short code (spreading code) and long code (scrambling code) are connected to the sliding correlator 71. The spreading codes are supplied to the sliding correlator 71 at a timing designated by the above control signal CTRLS3, that is, a timing detected by the path search stage 3. An EX-OR operation of the long code and the short code supplied from the registers 72, 73 is performed every bit, and the results are supplied to the sliding correlator 71 as a combined code. Moreover, the control signal CTRLS3 is also input to a symbol adder 75 to perform RAKE combination for integration of all the correlation peaks.

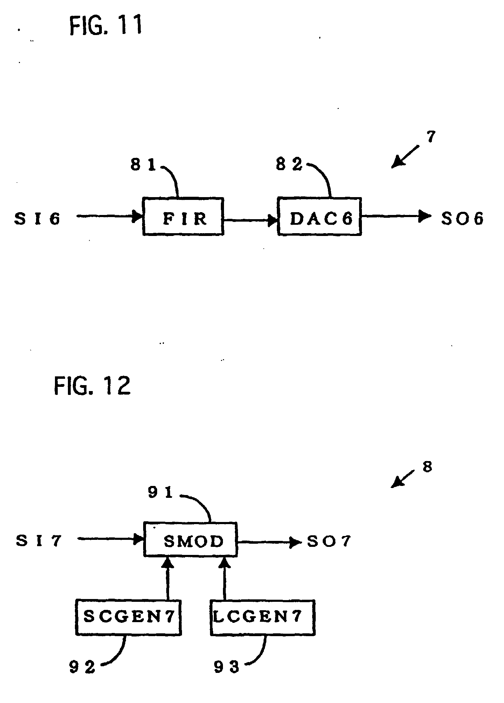

FIG. 12 shows a block diagram of a transmitting stage 8. The transmitting stage 8 has a spreading code modulation circuit 91 to which an input signal SI7 (corresponding to the output of the above transmitting buffer 9) is input, and registers 92, 93 respectively to supply short codes and long codes are connected to the spreading code modulation circuit 91. Similarly as the receiving side, combined codes of the short and long codes are generated to spread the input signals by the combined codes.

FIG. 11 shows a block diagram of a transmitting roll-off filter 7. The transmitting roll off filter 7 having an FIR filter 81 eliminates high frequency components of the input signal SI6 (corresponding to the output signal of the transmitting stage 8). The output of the FIR filter 81 is converted to an analog signal by a D/A converter 82 as an output signal SO6.

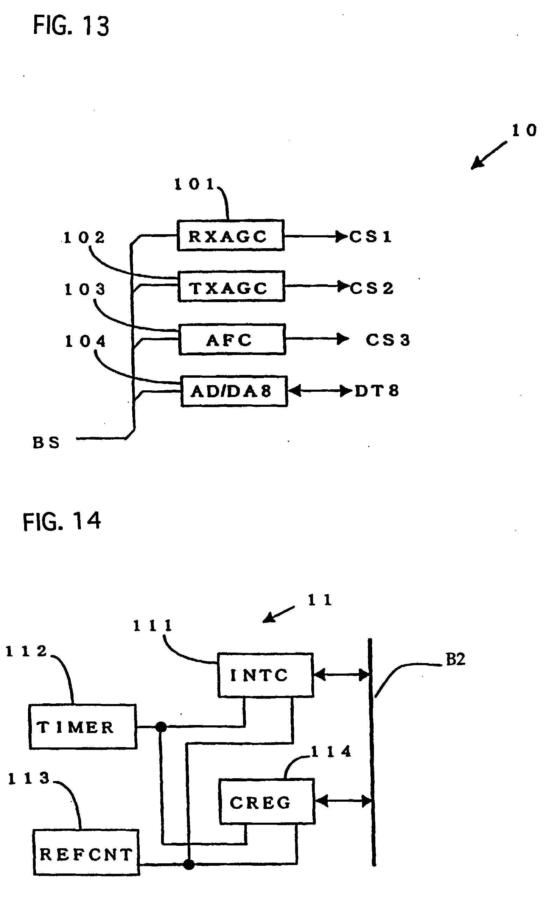

FIG. 13 shows a block diagram of a control stage 10 to control a radio frequency control stage. The stage 10 comprises a control circuit 101 to control a gain of an amplifier for received signals; a control circuit 102 to control a gain of an amplifier for transmitting signals; a control circuit 103 for frequency control of a radio signal receiving stage; and a converter 104 for general-purpose A/D and D/A conversion. The control circuits 101-103 outputs control signals CS1, CS2, and CS3, respectively. A data signal DT8 is input to the converter 104, and output from the above converter 104.

FIG. 14 shows a block diagram of a control stage 11. The stage 11 has an interrupt controller 111 connected to an MPU bus B2; and a control register 114 to store various kinds of microcodes. A timer 112 and a counter 113 are connected to the controller 111 and the control register 114 to set control timings.

Industrial Applicability

As mentioned above, the DS-CDMA receiver according to the present invention has an excellent advantage to reduce the circuit size and the electric power consumption.

**Claims**

1. A DS-CDMA receiver comprising:

a cell search stage performing detection of a timing for an initial synchronization with a received signal; and

a path search stage comprising smaller number of sliding correlators than the code length of spreading codes, and calculating a delay profile of said received signal after beginning of calculation of a correlation with a spreading code at a phase having an initial synchronization position detected at said cell search stage as a center,

characterized in that said path search stage causes change in the calculation frequency or the start frequency of the overall path search stage according to change in said delay profile.

2. A DS-CDMA receiver according to claim 1, characterized in that, in said path search stage, the start frequency of the overall path search stage is reduced low in the case of the small change in said delay profile, and the frequency of the overall path search stage is controlled high in the case of the large change in said profile.

3. A DS-CDMA receiver according to claim 1, characterized in that, in said path search stage, the change in said delay profile depends on the number of the correlation peaks of multipath signals.

4. A DS-CDMA receiver according to claim 1, characterized in that, in said path search stage, the change in said delay profile depends on the total sum of the phase changes in all the correlation peaks of multipath signals.

5. A DS-CDMA receiver according to claim 1, characterized in that, in said path search stage, the change in said delay profile depends on a value obtained through division of the total sum of the phase changes in all the correlation peaks of multipath signals by the total sum of the correlation peaks.

6. A DS-CDMA receiver comprising:

a cell search stage detecting a timing of an initial synchronization with a received signal; and

a path search stage detecting multipaths after beginning of calculation of a correlation with a spreading code using corresponding number of sliding correlators to a range of a phase window with the initial synchronization position detected by said cell search stage as a center,

characterized in that said path search stage causes a change in the width of said phase window according to said detected multipath widths.

7. A DS-CDMA receiver according to claim 1, or 6, characterized in that, in said path search stage, an object for calculation of said correlation is pilot blocks of a control channel or those of a traffic channel, or those of a common pilot channel of received signals.

FIG. 1

FIG. 2

EP 1 091 501 A1

## FIG. 3

FIG. 4

FIG. 5

## FIG. 6

```
          ┌─────────┐
          │  START  │
          └────┬────┘
               │
               ▼
          ╱─────────╲                    S 1
        ╱             ╲
      ╱                 ╲         N
    ╱  Is number of       ╲─────────────┐
    ╲  multipath same ?   ╱              │
      ╲                 ╱                │
        ╲             ╱                  │
          ╲─────────╱                    │
               │ Y                       │
               ▼          S 3            │
      ┌───────────────────────┐          │
      │ Calculation of        │          │
      │ phase shift  △        │          │
      └───────────┬───────────┘          │
                  │          S 4          │
                  ▼                       │
             ╱─────────╲                  │
           ╱             ╲     N          │
         ╱   △  >  △ t h   ╲──────┐       │
           ╲             ╱        │       │
             ╲─────────╱          │       │
                  │ Y             │       │
                  ▼      S 5      │       ▼        S 2
      ┌───────────────────┐      │  ┌──────────────┐
      │  △ F (△ − △ t h)  │      │  │  F = F m a x │
      └─────────┬─────────┘      │  └──────┬───────┘
                │◄───────────────┘         │
                │◄─────────────────────────┘
                ▼
          ┌─────────┐
          │   END   │
          └─────────┘
```

## FIG. 7

START

S 7 1 | Sorting of correlation peaks equal to or exceeding a predetermined value in order of size

S 7 2 | Generation of correlation peak train in time sequence, after extraction of predetermined number of correlation peaks from correlation power with maximum level

S 7 3 | Calculation of time distance $\triangle T = Te - Tb$ using phases Tb, Te at beginning and end of correlation peak train

S 7 4 |

$W = \triangle T \times w \quad (w \geqq 1.0)$ : Width of phase window

$Wb = \dfrac{Tb + Te}{2} - \dfrac{W}{2}$ : Beginning of phase window

$We = \dfrac{Tb + Te}{2} + \dfrac{W}{2}$ : End of phase window

END

## FIG. 8

FIG. 9

## FIG. 10

FIG. 11

$$7$$

SI6 $\longrightarrow$ | FIR |  81 $\longrightarrow$ | DAC6 |  82 $\longrightarrow$ SO6

FIG. 12

$$8$$

91

SI7 $\longrightarrow$ | SMOD | $\longrightarrow$ SO7

| SCGEN7 |     | LCGEN7 |

92                      93

## FIG. 13

## FIG. 14

EP 1 091 501 A1

## FIG. 15

| ←——— SLOTk+2 ———→ | ←——— SLOTk+1 ——→ | ←——— SLOTk ——→ | ←—— SLOTk-1 — |
|---|---|---|---|

| DATAk+2 | | DATAk+1 | | DATAk | | DATAk-1 | |

PILOTk+2            PILOTk+1            PILOTk            PILOTk-1

# INTERNATIONAL SEARCH REPORT

| International application No. |
| --- |
| PCT/JP00/02778 |

**A. CLASSIFICATION OF SUBJECT MATTER**
Int.Cl[7] H04B1/707, H04J13/04, H04B7/26, H04Q7/28

According to International Patent Classification (IPC) or to both national classification and IPC

**B. FIELDS SEARCHED**

Minimum documentation searched (classification system followed by classification symbols)
Int.Cl[7] H04B1/69-1/713, H04J13/00-13/06,
H04B7/24-7/26, H04Q7/06-7/38

Documentation searched other than minimum documentation to the extent that such documents are included in the fields searched
Jitsuyo Shinan Koho           1926-1996     Toroku Jitsuyo Shinan Koho  1994-2000
Kokai Jitsuyo Shinan Koho   1971-2000     Jitsuyo Shinan Toroku Koho  1996-2000

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | WO, 97/33400, A1 (NTT Ido Tsushinmo K.K.), 12 September, 1997 (12.09.97), Full text; Figs. 1 to 27 | 1,2,6,7 |
| A | & EP, 825737, A1       & KR, 99008317, A | 3-5 |
| Y | EP, 757450, A2 (YOZAN INC.), 05 February, 1997 (05.02.97), Full text; Figs. 1 to 13 | 1,2,6,7 |
| A | & JP, 9-46174, A        & US, 5781584, A | 3-5 |
| Y | EP, 892503, A2 (MATSUSHITA ELECTRIC INDUSTRIAL CO., LTD), 20 January, 1999 (20.01.99), | 1,2,6,7 |
| A | Full text; Figs. 1 to 16 & JP, 11-88295, A     & CN, 1206267, A & KR, 99013970, A | 3-5 |
| Y | EP, 903951, A2 (Matsushita Electric Industrial Co.,Ltd), 24 March, 1999 (24.03.99), | 1,2,7 |
| A | Full text; Figs. 1 to 3 & JP, 11-98071, A     & CN, 1213945, A & CA, 2247725, A1     & KR, 99029944, A | 3-6 |

☒ Further documents are listed in the continuation of Box C.      ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 27 July, 2000 (27.07.00) | 08 August, 2000 (08.08.00) |

| Name and mailing address of the ISA/ Japanese Patent Office | Authorized officer |
| --- | --- |
| Facsimile No. | Telephone No. |

Form PCT/ISA/210 (second sheet) (July 1992)

**INTERNATIONAL SEARCH REPORT**

International application No.

PCT/JP00/02778

| C (Continuation). DOCUMENTS CONSIDERED TO BE RELEVANT | | |
|---|---|---|
| Category* | Citation of document, with indication, where appropriate, of the relevant passages | Relevant to claim No. |
| Y | Akio Aoyama et al., " Soden Denryoku  Seigyo wo mochiita DS-CDMA Houshiki no Pass Search Tokusei", Proceedings 1 | 7 |
| A | of Communication society meeting of the Institute of Electronics, Information and Communication Engineers,  1 in 1997, 13 August, 1997 (13.08.97), (Tokyo), P.270 | 1-6 |
| P, Y | JP, 11-220774, A (Fujitsu Limited), 10 August, 1999 (10.08.99), Full text; Figs. 1 to 41 | 1,2,7 |
| P, A | & CN, 1225529, A | 3-6 |
| P, Y | JP, 2000-22665, A (NEC Corporation), 21 January, 2000 (21.01.00), Full text; Figs. 1 to 17 | 6,7 |
| P, A | & WO, 2000/2338, A1 & AU, 9943919, A | 1-5 |

Form PCT/ISA/210 (continuation of second sheet) (July 1992)